# EUROPÄISCHE PATENTSCHRIFT

(11) **EP 2 171 552 B1**
(45) Veröffentlichungstag und Bekanntmachung des Hinweises auf die Patenterteilung: **29.06.2011**
(21) Anmeldenummer: 08774956.0
(22) Anmeldetag: 10.07.2008
(51) Int. Cl.: G05B 19/042, B60R 25/02

(54) **EINE EIN TEMPERATURABHÄNGIGES SIGNAL LIEFERNDE WATCHDOG-SCHALTUNG FÜR EINEN MIKROCONTROLLER EINER ELV**
WATCHDOG CIRCUIT PROVIDING A TEMPERATURE-DEPENDANT SIGNAL FOR A MICROCONTROLLER OF AN ELECTRONIC STEERING LOCK
CIRCUIT DE SURVEILLANCE FOURNISSANT UN SIGNAL DÉPENDANT DE LA TEMPÉRATURE POUR UN MICROCONTRÔLEUR D'UN DISPOSITIF DE BLOCAGE DU SYSTÈME DE DIRECTION

(30) Priorität: 16.07.2007 DE 102007033365
(43) Veröffentlichungstag der Anmeldung: 07.04.2010
(73) Patentinhaber: Huf Hülsbeck & Fürst GmbH & Co. KG, 42551 Velbert (DE)
(72) Erfinder: SCHINDLER, Mirko, 42549 Velbert (DE); SCHUMACHER, Helmut, 48653 Coesfeld (DE); WEBER, Franz-Josef, 40699 Erkrath (DE); FELDSIEPER, Marc, 45529 Hattingen (DE)
(74) Vertreter: Zenz
(86) Internationale Anmeldenummer: PCT/EP2008/058979
(87) Internationale Veröffentlichungsnummer: WO 2009/010442

(56) Entgegenhaltungen:
- EP-A- 0 753 437
- DE-A1- 4 303 485
- DE-A1-102004 060 656

## Beschreibung

Die Erfindung betrifft eine Ansteuerschaltung für eine ELV mit einem Mikrocontroller zum Ansteuern eines Motorantriebs der ELV und einer Watchdog-Schaltung, wobei ein Eingang des Mikrocontrollers mit einem ersten Ausgang der Watchdog-Schaltung, ein Ausgang des Mikrocontrollers mit einem Eingang der Watchdog-Schaltung und ein Rücksetz-Eingang des Mikrocontrollers mit einem zweiten Ausgang der Watchdog-Schaltung gekoppelt ist, wobei der Mikrocontroller so konfiguriert ist, dass er nach Empfang eines Impulses an dem Eingang innerhalb einer ersten vorgegebenen Zeitdauer ein Antwortsignal an dem Ausgang ausgibt, wobei die Watchdog-Schaltung so ausgebildet ist, dass sie dann, wenn sie nach Ausgabe eines Impulses an ihrem ersten Ausgang innerhalb einer zweiten vorgegebenen Zeitdauer, die größer als die erste vorgegebene Zeitdauer ist, kein Antwortsignal an ihrem Eingang empfängt, ein Rücksetzsignal an ihrem zweiten Ausgang ausgibt.

Eine Ansteuerschaltung für eine ELV (= elektronische Lenkungsverriegelung) der eingangs genannten Art liefert unter anderem Ansteuersignale für Leistungsschaltbauelemente, die zwischen einer Masse und Betriebsspannung umfassenden Spannungsversorgung und einem Antriebsmotor der Lenkungsverriegelung eingekoppelt sind. Beispielsweise werden die beiden Anschlüsse des Antriebsmotors wahlweise entweder mit der Betriebsspannung oder mit Masse gekoppelt oder sowohl von der Betriebsspannung als auch von Masse entkoppelt, so dass ein Antrieb des Motors in beiden Richtungen und ein Ausschalten des Motors ermöglicht wird. Üblicherweise ist der verwendete Mikrocontroller mit Sensoren gekoppelt, die Stellzustände der Lenkungsverriegelung erfassen können. Die Ansteuerung des Antriebsmotors erfolgt üblicherweise in Abhängigkeit von der einzustellenden Position eines Verriegelungsbolzens (Verriegelungsstellung oder Entriegelungsstellung), in Abhängigkeit von dem aktuellen, von den Sensoren erfassten Stellzustand der Verriegelungsmechanik und gegebenenfalls noch in Abhängigkeit von der Betriebsspannung und der Belastung des Motorantriebs.

Es ist ferner erwünscht, die Ansteuerung des Motorantriebs in Abhängigkeit von der am Ort der ELV auftretenden Temperatur (Umgebungstemperatur) vorzunehmen. Diese kann bei Kraftfahrzeugen zwischen beispielsweise -40°C und +80°C liegen. Bei derartigen Temperaturunterschieden verändert sich beispielsweise der Widerstand der Motorwicklung. Darüber hinaus ändern sich die Dimensionen der Getriebebauteile sowie die Reibungsverluste. Dies führt dazu, dass die Ansteuerung des Antriebsmotors der Umgebungstemperatur angepasst werden sollte, um einen optimalen (beispielsweise geräuscharmen und/oder energiesparenden) Betrieb des Motorantriebs zu erzielen.

Zu diesem Zweck wäre es erwünscht, wenn der Ansteuerschaltung, insbesondere dem Mikrocontroller, eine Information über die Umgebungstemperatur zur Verfügung gestellt werden könnte. Selbstverständlich könnte dies durch einen Temperatursensor mit einer entsprechenden Auswerteschaltung, die wiederum mit einem Eingabeport des Mikrocontrollers gekoppelt wäre, realisiert werden. Dies würde zusätzliche Bauelemente und darüber hinaus einen zusätzlichen Eingabeport des Mikrocontrollers erfordern.

Aufgabe der Erfindung ist es daher, dem Mikrocontroller eine Information über die Umgebungstemperatur zur Verfügung zu stellen, ohne einen zusätzlichen Port des Mikrocontrollers zu beanspruchen.

Diese Aufgabe wird erfindungsgemäß durch eine Ansteuerschaltung mit den Merkmalen des Anspruchs 1 gelöst. Eine Ansteuerschaltung der eingangs genannten Art ist erfindungsgemäß dadurch gekennzeichnet, dass die Watchdog-Schaltung so ausgebildet ist, dass sie eine Impulsfolge an dem ersten Ausgang ausgibt, wobei wenigstens ein Parameter der Impulsfolge von einer Umgebungstemperatur eines Elements der Watchdog-Schaltung abhängt, und dass der Mikrocontroller den wenigstens einen Parameter der an seinem Eingang empfangenen Impulsfolge derart auswertet, dass er einen Wert für die Umgebungstemperatur gewinnt, wobei der Mikrocontroller die ELV in Abhängigkeit von dem gewonnenen Wert für die Umgebungstemperatur ansteuert. Unter einem Impuls soll hier ein beliebiger Signalverlauf verstanden werden, der die Zuordnung eines bestimmten Zeitpunkts gestattet. Der Empfang eines Impulses durch den Mikrocontroller erfolgt zu diesem Zeitpunkt. Der Mikrocontroller legt innerhalb einer ersten vorgegebenen Zeitdauer ein Antwortsignal an den Ausgang an. Dies bedeutet, dass der Antwortzeitpunkt nicht fest vorgegeben zu sein braucht, die Antwort muss nur innerhalb dieser ersten vorgegebenen Zeitdauer erfolgen. Das Antwortsignal ist ein beliebiges digitales oder analoges Signal, das die Information einer Antwort trägt. Im einfachsten Fall ist das Antwortsignal ein binäres Signal, wobei die Information der Antwort entweder im Vorliegen eines bestimmten Zustands des Signals (hoch oder niedrig) oder einer bestimmten Flanke (ansteigende oder abfallende) liegt. Auch das von der Watchdog-Schaltung ausgegebene Rücksetzsignal kann beliebiger Art sein. Vorzugsweise ist es ein binäres Signal, wobei das Rücksetzen des Mikrocontrollers durch einen bestimmten Zustand (hoch oder niedrig) oder eine bestimmte Flanke ausgelöst wird. Der von der Umgebungstemperatur abhängende Parameter der Impulsfolge kann beispielsweise die Frequenz der Impulse, ein bestimmter Code der Impulse oder eine bestimmte Impulsform sein. Die Impulsform wiederum kann durch eine bestimmte Dauer, das heißt ein bestimmtes Tastverhältnis, einen bestimmten Verlauf oder auch eine bestimmte Amplitude des Impulses charakterisiert sein. Der Parameter hängt von der Umgebungstemperatur eines Elements der Watchdog-Schaltung ab. Dieses Element kann ein Bauelement, beispielsweise ein ohmscher Widerstand, oder auch eine Teilschaltung der Gesamtschaltung sein. Der Mikrocontroller wertet den wenigstens einen Parameter aus. Deshalb ist der Parameter vorzugsweise ein Parameter, der mit Hilfe eines digitalen (binären) Eingangs des Mikrocontrollers ausgewertet werden kann, das heißt, der Parameter ist vorzugsweise eine Periodendauer der Impulsfolge, ein Tastverhältnis der Impulsfolge oder ein Code der Impulsfolge. Der Mikrocontroller ist dann so programmiert, dass er den Parameter und dessen Änderung mit ausreichender Genauigkeit auswerten kann, so dass ein der Umgebungstemperatur entsprechender Wert (Digitalwert) gewonnen werden kann. Die Erfindung hat nicht nur den Vorteil, dass kein zusätzlicher Eingangsport des Mikrocontrollers für die Übergabe der Temperaturinformation an den Mikrocontroller erforderlich ist. Die Erfindung ermöglicht darüber hinaus die Gewinnung der Temperaturinformation mit relativ einfachen Mitteln (und wenigen Bauelementen), da sich die Watchdog-Schaltung üblicherweise in (der Nähe) der elektronischen Lenkungsverriegelung befindet, so dass die von der Watchdog-Schaltung ausgewertete Temperatur auch der Umgebungstemperatur der ELV näherungsweise entspricht.

Bei einer bevorzugten Ausführungsform ist die Watchdog-Schaltung so ausgebildet, dass sie periodisch mit einer vorgegebenen Periodendauer Impulse an dem ersten Ausgang ausgibt, wobei der von der Umgebungstemperatur abhängige Parameter der Impulsfolge die Periodendauer ist, wobei der Mikrocontroller die Abstände der an seinem Eingang empfangenen Impulse derart auswertet, dass er einen Wert für die Umgebungstemperatur gewinnt. Die Abstände der Impulse lassen sich beispielsweise durch die Messung der Abstände der ansteigenden oder der abfallenden Flanken bestimmen. Auch ist es möglich, dass der Mikrocontroller in relativ kurzen Abständen periodisch den Pegel an dem Eingang abfragt und so mit der Genauigkeit dieser Abfrageperiode die Flanken erfassen kann.

Bei einer besonders einfachen, bevorzugten Ausführungsform der erfindungsgemäßen Ansteuerschaltung ist ein die Periodendauer bestimmender Widerstand der Watchdog-Schaltung ein temperaturabhängiger Widerstand. Dieser Widerstand stellt das Element der Watchdog-Schaltung dar, von dessen Umgebungstemperatur die Periodendauer abhängt. Ein solcher Widerstand ist häufig bei Watchdog-Schaltungen in integrierter Ausführung an einem Pin angekoppelt, damit die Periodendauer der Watchdog-Ausgabeimpulse eingestellt werden kann. Die Ausführung des ohnehin vorhandenen Widerstands als temperaturabhängiger Widerstand, vorzugsweise als PTC-Widerstand mit einem relativ hohen Temperaturkoeffizienten, erfordert einen minimalen Bauelementeaufwand und keinen zusätzlichen Bauraum.

Die Ansteuerschaltung ist vorzugsweise dadurch gekennzeichnet, dass der Mikrocontroller wenigstens einen weiteren Ausgang zum Ansteuern wenigstens eines zwischen einer Spannungsversorgung und dem Antriebsmotor eingekoppelten Leistungsschaltbauelements aufweist, wobei der Mikrocontroller das Leistungsschaltbauelement mit einer Impulsfolge mit einem vorgegebenen Tastverhältnis ansteuert. Die genannte Einkopplung eines Leistungsschaltbauelements zwischen einer Spannungsversorgung und dem Antriebsmotor umfasst hier auch die Einkopplung zwischen Masse und einem Anschluss des Antriebsmotors in der eingangs anhand des Standes der Technik geschilderten Weise. Der Mikrocontroller steuert das Leistungsschaltbauelement mit einer Impulsfolge eines vorgegebenen Tastverhältnisses an, wobei das Tastverhältnis die dem Antriebsmotor zugeführte mittlere Leistung bestimmt. Auf diese Weise ist eine Steuerung der Motorleistung möglich. Als Motor wird üblicherweise ein preiswerter Gleichstrommotor verwendet. Bei der bevorzugten Ausführungsform ist das Tastverhältnis nicht nur von der Betriebsspannung, vom jeweiligen Stellzustand der elektronischen Lenkungsverriegelung oder der dabei auftretenden Motorbelastung abhängig, das Tastverhältnis der das Leistungsschaltbauelement ansteuernden Impulsfolge ist erfindungsgemäß insbesondere auch von der Periodendauer der an dem Eingang des Mikrocontrollers empfangenen Impulse und somit von der Umgebungstemperatur der Watchdog-Schaltung abhängig. Die funktionale Abhängigkeit des Tastverhältnisses der Ansteuerimpulse von den Parametern Betriebsspannung, Position der Lenkungsverriegelung, Belastung und/oder Temperatur ist in dem Mikrocontroller in Firmware hinterlegt. Die maximale Ansteuerleistung wird bei einem Tastverhältnis von 100 %, das heißt bei ununterbrochener Ansteuerung des Leistungsschaltbauelements erreicht. Ausgehend von dieser Daueransteuerung kann das Tastverhältnis bei einer geringen Leistungsanforderung beispielsweise auf wenige Prozent gesenkt werden. Die Impulsfolge mit dem vorgegebenen Tastverhältnis hat vorzugsweise eine Frequenz zwischen 0,1 kHz und 100 kHz, insbesondere zwischen 4 kHz und 20 kHz. Bei dieser Frequenz, die über der Resonanzfrequenz des mechanischen Motorantriebs liegen sollte, wird sowohl aufgrund der induktiven Wirkung der Spulen des Antriebsmotors als auch aufgrund der mechanischen Trägheiten eine Mittelung der Ansteuerleistung erreicht.

Bei einer alternativen Ausführungsform ist die Ansteuerschaltung dadurch gekennzeichnet, dass die Watchdog-Schaltung so ausgebildet ist, dass sie Impulse mit einer vorgegebenen Impulsform an dem ersten Ausgang ausgibt, wobei der von der Umgebungstemperatur abhängige Parameter ein die Impulsform kennzeichnender Parameter ist, wobei der Mikrocontroller die Impulsform der an seinem Eingang empfangenen Impulse derart auswertet, dass er einen Wert für die Umgebungstemperatur gewinnt. Vorzugsweise ist die Watchdog-Schaltung so ausgebildet, dass sie Impulse mit einem vorgegebenen Tastverhältnis an dem ersten Ausgang ausgibt, wobei der von der Umgebungstemperatur abhängige Parameter das Tastverhältnis ist. Der Mikrocontroller wertet das Tastverhältnis der an seinem Eingang empfangenen Impulse derart aus, dass er einen Wert für die Umgebungstemperatur gewinnt. Beispielsweise wird die Abhängigkeit des Tastverhältnisses von der Umgebungstemperatur dadurch erreicht, dass ein das Tastverhältnis bestimmender Widerstand der Watchdog-Schaltung ein temperaturabhängiger Widerstand ist. Ebenso wie bei der oben genannten bevorzugten Ausführungsform ermöglicht auch diese Ausführungsform die Übergabe eines die Temperatur kennzeichnenden Signals an den Mikrocontroller ohne zusätzlichen Schaltungsaufwand. Auch die für die bevorzugte Ausführungsform oben erörterten bevorzugten Weiterbildungen sind in entsprechender Weise für die eine vorgegebene Impulsform auswertende Ausführungsform anwendbar.

Vorteilhafte und/oder bevorzugte Ausführungsformen der Erfindung sind in den Unteransprüchen gekennzeichnet.

Im folgenden wird die Erfindung anhand eines in der Zeichnung dargestellten bevorzugten Ausführungsbeispiels näher erläutert. In der Zeichnung zeigen:
Figur 1 ein Blockschaltbild einer erfindungsgemäßen Ansteuerschaltung für eine ELV; und
Figur 2 die zeitlichen Verläufe einiger zwischen einer Watchdog-Schaltung und einem Mikrocontroller der ELV ausgetauschter Signale.

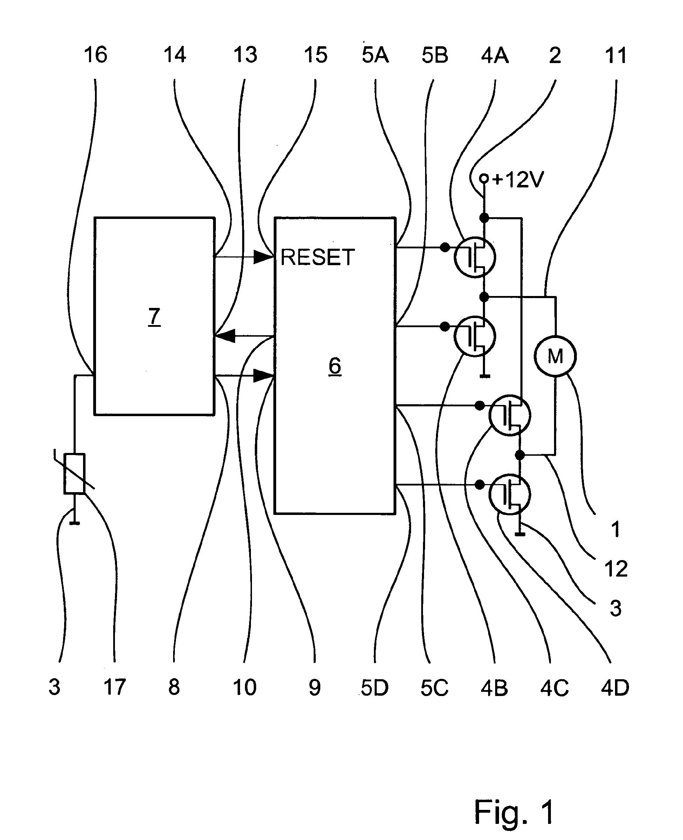

Figur 1 zeigt eine schematische Darstellung eines Teils einer Ansteuerschaltung für eine elektronische Lenkungsverriegelung (ELV), insbesondere für den Motorantrieb der ELV. Ein Motor 1, der das Getriebe zum Bewegen eines Sperrbolzens für einen Eingriff in eine Lenkradsäule antreibt, ist über Leistungsschaltbauelemente zwischen einer Spannungsversorgung 2 und Masse 3 eingekoppelt. Bei dem in Figur 1 schematisch dargestellten Ausführungsbeispiel können beide Anschlüsse des Motors 1 entweder mit der Spannungsversorgung 2 oder mit Masse 3 gekoppelt werden, so dass der Motor in beiden Richtungen bewegt werden kann. Es sind auch elektronische Lenkungsverriegelungsanordnungen bekannt, bei denen der Motor stets nur in einer Richtung bewegt wird. Bei einer solchen Anordnung kann ein Teil der in Figur 1 gezeigten Leistungsschaltbauelemente entfallen. Wenn sich der Motor 1 nicht bewegen soll, werden beide Anschlüsse des Motors zur Sicherheit mit Masse 3 gekoppelt, d. h., es wird dafür gesorgt, dass die beiden Leistungsschaltbauelemente, die die Motoranschlüsse mit Masse 3 koppeln, eingeschaltet bleiben.

Die Leistungsschaltbauelemente können Relais, bipolare Leistungsschalttransistoren, Thyristoren, Triacs oder - wie in Figur 1 skizziert - Leistungs-FETs sein. Leistungs-FETs haben den Vorteil, dass sie sich (nahezu) leistungslos (stromlos) ansteuern lassen. Bei der in Figur 1 dargestellten Ausführungsform ist ein erster Motoranschluss 11 über einen ersten Leistungs-FET 4A mit der Spannungsversorgung 2 und über einen zweiten Leistungs-FET 4B mit Masse gekoppelt. Ein zweiter Anschluss 12 des Motors 1 ist über einen dritten Leistungs-FET 4C mit der Spannungsversorgung 2 und einen vierten Leistungs-FET 4D mit Masse 3 gekoppelt. Um den Motor in eine erste Richtung anzutreiben, werden die Leistungs-FETs 4A und 4D eingeschaltet, während die beiden verbleibenden Leistungs-FETs 4B und 4C ausgeschaltet sind. Um den Motor in die entgegengesetzte Richtung anzutreiben, werden die Leistungs-FETs 4B und 4C eingeschaltet, während die Leistungs-FETs 4A und 4D ausgeschaltet sind. Im Ruhezustand sind vorzugsweise die Leistungs-FETs 4B und 4D eingeschaltet.

Die vier Leistungs-FETs 4A bis 4D werden von den Steuerausgängen 5A bis 5D eines Mikrocontrollers 6 angesteuert. Der Mikrocontroller 6 enthält üblicherweise einen Mikroprozessor, Speicherbauelemente zum Speichern einer Firmware und eine Reihe von Eingabe- und Ausgabeschaltungen für digitale und analoge Eingangs- bzw. Ausgangssignale. Die Eingabeschaltungen für analoge Eingangssignale enthalten Analog-Digital-Umsetzer und die Ausgabeschaltungen für analoge Signale enthalten Digital-Analog-Umsetzer. Die vier Ausgangsanschlüsse 5A bis 5D zum Ansteuern der Leistungs-FETs 4A bis 4D können digitale Ausgangsanschlüsse sein.

Bei einer bevorzugten Ausführungsform werden die Leistungs-FETs 4A bis 4D während des Einkoppelns des Motors 1 zwischen die Spannungsversorgung 2 und Masse 3 nur bei einer maximalen Motorleistung dauerhaft zwischen der Spannungsversorgung und Masse eingeschaltet. Soll jedoch eine geringere Motorleistung erzielt werden (beispielsweise um Energie zu sparen oder den Geräuschpegel zu senken), so werden die Leistungs-FETs mit einer Folge von Impulsen eines vorgegebenen Tastverhältnisses angesteuert. Die Frequenz der Impulsfolge liegt dabei zwischen 0,1 kHz und 100 kHz, vorzugsweise zwischen 4 kHz und 20 kHz. Die Frequenz ist so gewählt, dass durch die Motorinduktivität einerseits und die mechanische Trägheit des Motors andererseits eine Mittelung (Glättung) des Motorstroms bzw. der Motorbewegung stattfindet. Das vorgegebene Tastverhältnis bestimmt die Motoransteuerleistung. Wenn beispielsweise bei der einen Motordrehrichtung die Leistungs-FETs 4B und 4C ausgeschaltet bleiben und nur die Leistungs-FETs 4A und 4D angesteuert werden, so können entweder beide Leistungs-FETs 4A und 4D mit den Impulsen mit dem vorgegebenen Tastverhältnis angesteuert werden oder (vorzugsweise) nur der Leistungs-FET 4A mit dem gepulsten Signal angesteuert werden, während der Leistungs-FET 4D dauerhaft eingeschaltet wird.

Der Mikrocontroller 6 weist eine Reihe von (nicht dargestellten) Eingangsanschlüssen auf, die mit Positionserfassungssensoren der ELV gekoppelt sein können. Details der Kopplung und der Funktion sind bekannt und werden hier nicht im Detail beschrieben.

Der Mikrocontroller 6 ist mit einer Watchdog-Schaltung 7 gekoppelt. Die Watchdog-Schaltung weist einen ersten Ausgang 8 auf, der mit einem Eingang 9 des Mikrocontrollers 6 gekoppelt ist. An dem ersten Ausgang 8 gibt die Watchdog-Schaltung eine Impulsfolge aus, deren Impulse vorgegebene Abstände haben. Der Mikrocontroller 6 empfängt diese Impulse an seinem (digitalen) Eingang 9, wobei der Empfang des Impulses beispielsweise ein Interrupt auslösen oder durch periodische Abfrage des Zustands des Eingangs 9 erfasst werden könnte. Sobald der Mikrocontroller 6 einen Impuls an seinem Eingang erfasst hat, erzeugt er innerhalb einer vorgegebenen Zeitdauer ein Ausgangssignal, vorzugsweise einen Ausgangsimpuls, an einem Ausgang 10. Dieser innerhalb einer ersten vorgegeben Zeitdauer nach Empfang des Impulses am Eingang 9 über den Ausgang 10 ausgegebene Impuls wird an die Watchdog-Schaltung 7 übermittelt, die einen Eingang 13 aufweist, der mit dem Ausgang 10 des Mikrocontrollers 6 gekoppelt ist. Sofern die Watchdog-Schaltung 7 nach Ausgabe eines Impulses an ihrem ersten Ausgang 8 innerhalb einer zweiten Zeitdauer, die größer als die erste vorgegebene Zeitdauer ist, ein Antwortsignal an ihrem Eingang 13 empfängt, geht sie von einem ordnungsgemäßen Funktionieren des Mikrocontrollers 6 aus. Wird jedoch innerhalb der zweiten vorgegebenen Zeitdauer kein Antwortimpuls an dem Eingang 13 der Watchdog-Schaltung 7 empfangen, so löst die Watchdog-Schaltung 7 ein Rücksetzen des Mikrocontrollers 6 aus, indem sie über einen zweiten Ausgang 14 ein Rücksetz-Signal an einen Rücksetzeingang 15 des Mikrocontrollers 6 anlegt.

Die Abstände (Periodendauer) der an dem Ausgang 8 der Watchdog-Schaltung 7 ausgegebenen Abfrageimpulse sind von der Watchdog-Schaltung vorgegeben und hängen unter anderem von dem Wert eines Widerstands ab, der zwischen einem Anschluss 16 der Watchdog-Schaltung 7 und Masse 3 eingekoppelt ist. Das zwischen dem Anschluss 16 und Masse 3 eingekoppelte Widerstandsbauelement 17 ist erfindungsgemäß als temperaturabhängiges Widerstandsbauelement, beispielsweise als PTC-Widerstand oder NTC-Widerstand, ausgeführt. Dies hat zur Folge, dass die Abstände zwischen den einzelnen am Ausgang 8 der Watchdog-Schaltung ausgegebenen Impulse stärker von der Temperatur abhängen als dies der Fall wäre, wenn anstelle des temperaturabhängigen Widerstandsbauelements 17 ein herkömmlicher Widerstand verwendet würde (selbstverständlich sind auch herkömmliche Widerstandsbauelemente temperaturabhängig; die Temperaturabhängigkeit ist aber so gering, dass die daraus sich ergebenden Änderungen der Abstände der einzelnen Impulse nur schwer auswertbar sind). Der Mikrocontroller 6 ist nun so konfiguriert, dass er die sich ändernden Abstände der am Eingang 9 empfangenen Impulse derart auswerten kann, dass er ein für die Temperatur am Ort des Widerstandsbauelements 17 charakteristischen Wert erzeugen und speichern kann. Der Mikrocontroller 6 gewinnt somit eine Information über die Temperatur am Ort des Widerstandsbauelements 17. Das Widerstandsbauelement 17, die Watchdog-Schaltung 7 und der Mikrocontroller sind vorzugsweise baulich in der Nähe des Antriebs der elektronischen Lenkungsverriegelung derart angeordnet, dass die Temperatur am Ort des Widerstandsbauelements 17 repräsentativ für die Temperatur der elektronischen Lenkungsverriegelung, insbesondere der Temperatur der Umgebung der Motorwicklung und des Getriebes, ist. Die Information über die zeitlichen Abstände der an dem Eingang 9 empfangenen Impulse gewinnt der Mikrocontroller 6 beispielsweise über eine programmierte Zählerschaltung, die taktabhängig zählt und die durch das Erfassen des Beginns eines Impulses am Eingang 9 ausgelöst und durch das Erfassen des Beginns des nächsten Impulses ausgelesen wird.

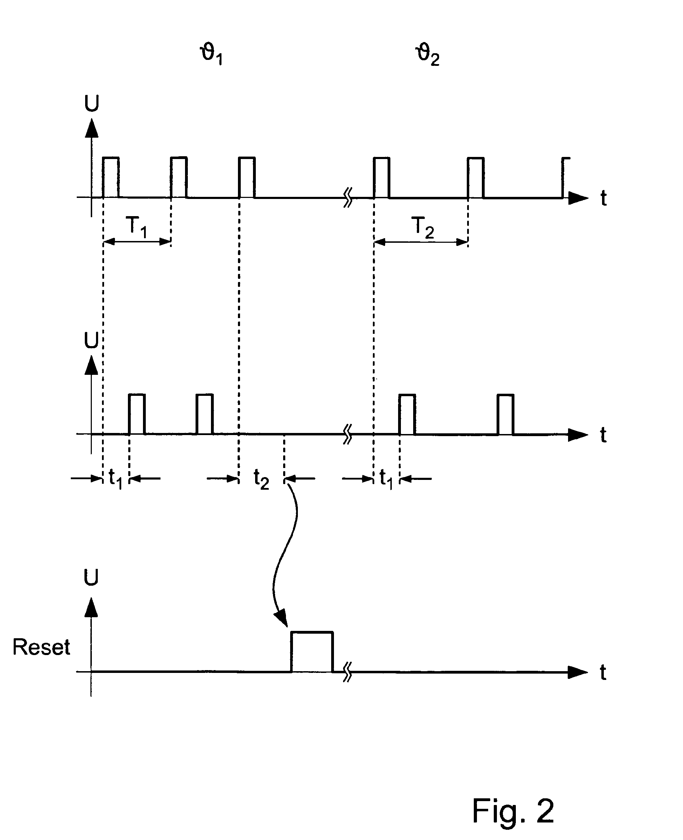

Figur 2 zeigt schematisch die zeitlichen Verläufe der zwischen der Watchdog-Schaltung 7 und dem Mikrocontroller 6 ausgetauschten Signale. Die oberste Zeitleiste zeigt die Impulsverläufe, die die Watchdog-Schaltung 7 an dem ersten Ausgang 8 ausgibt. Die Darstellung ist in zwei Abschnitte unterteilt; auf der linken Seite ist die Impulsfolge für eine erste Temperatur ϑ₁ und auf der rechten Seite für eine zweite Temperatur ϑ₂ dargestellt. Die Abstände (Periodendauer T) der Impulse sind bei der ersten Temperatur ϑ₁ geringer als bei der zweiten Temperatur ϑ₂. Diese Abstände T können von dem Mikrocontroller 6 erfasst und ausgewertet werden.

In der zweiten Zeitleiste sind die Signale am Ausgang des Mikrocontrollers dargestellt. Nach Erfassen eines Impulses an seinem Eingang 9 gibt der Mikrocontroller 6 innerhalb einer ersten Zeitdauer t₁ einen Impuls an seinem Ausgang 10 aus, den die Watchdog-Schaltung 7 an ihrem Eingang 13 empfängt. Die Zeitdauer t₁, innerhalb derer der Mikrocontroller 6 die Antwort an seinem Ausgang 10 ausgibt, hängt näherungsweise nicht von der Temperatur ab, wie sich Figur 2 entnehmen lässt. Diese Zeitdauer hängt vielmehr von der Art der Programmierung des Antwortsignals und von der Taktfrequenz des Mikrocontrollers ab. In Figur 2 ist auch der Fall dargestellt, dass der Mikrocontroller 6 keine Antwort innerhalb einer zweiten vorgegebenen Zeitdauer t₂ ausgibt. Sobald die Watchdog-Schaltung 7 feststellt, dass innerhalb der vorgegebenen zweiten Zeitdauer t₂ kein Antwortsignal an ihrem Eingang 13 einging, erzeugt sie ein Ausgangssignal an ihrem zweiten Ausgang 14, nämlich das Rücksetzsignal (RESET). Dieses Rücksetzsignal ist in der unteren Zeitleiste der Figur 2 dargestellt. Das Rücksetzsignal wird an einen Rücksetz-Eingang 15 des Mikrocontrollers 6 angelegt. Durch das Rücksetzen wird der Mikrocontroller 6 in einen definierten Zustand zurückversetzt.

Im Rahmen der Erfindung sind eine Reihe alternativer Ausführungsformen denkbar. Beispielsweise könnte ein anderes temperaturabhängiges Bauelement verwendet werden, um die Temperaturabhängigkeit des am Ausgang 8 aus der Watchdog-Schaltung ausgegebenen Signals herzustellen. Das Signal am Ausgang 8 könnte temperaturabhängig auch dadurch verändert werden, dass ein Tastverhältnis der Impulsfolge verändert wird, wobei beispielsweise das Antwortsignal durch die ansteigende Flanke eines Impulses ausgelöst wird, während die Dauer des Impulses am Eingang 9 die Temperatur repräsentiert. Es sind auch Ausführungsformen vorstellbar, bei denen ein Impulspaket, d. h. ein Burst kurz aufeinanderfolgender Impulse am Ausgang 8 ausgegeben wird, wobei die Anzahl oder eine Codierung der Impulse des Bursts die Temperatur charakterisiert. Bevorzugt sind jedoch einfache Ausführungsformen, bei denen möglichst wenig schaltungstechnische Änderungen vorzunehmen sind und zur Realisierung der Erfindung lediglich die Firmware des Mikrocontrollers 6 modifiziert zu werden braucht.

## Patentansprüche

1. Ansteuerschaltung für eine ELV mit einem Mikrocontroller (6) zum Ansteuern eines Motorantriebs (1) der ELV und einer Watchdog-Schaltung (7),
wobei ein Eingang (9) des Mikrocontrollers (6) mit einem ersten Ausgang (8) der Watchdog-Schaltung (7), ein Ausgang (10) des Mikrocontrollers mit einem Eingang (13) der Watchdog-Schaltung und ein Rücksetz-Eingang (15) des Mikrocontrollers mit einem zweiten Ausgang (14) der Watchdog-Schaltung gekoppelt ist,
wobei der Mikrocontroller (6) so konfiguriert ist, dass er nach Empfang eines Impulses an dem Eingang (9) innerhalb einer ersten vorgegebenen Zeitdauer (t₁) ein Antwortsignal an dem Ausgang (10) ausgibt,
wobei die Watchdog-Schaltung (7) so ausgebildet ist, dass sie dann, wenn sie nach Ausgabe eines Impulses an ihrem ersten Ausgang (8) innerhalb einer zweiten vorgegebenen Zeitdauer (t₂), die größer als die erste vorgegebene Zeitdauer (t₁) ist, kein Antwortsignal an ihrem Eingang (13) empfängt, ein Rücksetzsignal an ihrem zweiten Ausgang (14) ausgibt,
**dadurch gekennzeichnet,**
**dass** die Watchdog-Schaltung (7) so ausgebildet ist, dass sie eine Impulsfolge an dem ersten Ausgang (8) ausgibt, wobei wenigstens ein Parameter (T) der Impulsfolge von einer Umgebungstemperatur (ϑ) eines Elements (17) der Watchdog-Schaltung abhängt, und
**dass** der Mikrocontroller (6) den wenigstens einen Parameter (T) der an seinem Eingang (9) empfangenen Impulsfolge derart auswertet, dass er einen Wert für die Umgebungstemperatur (ϑ) gewinnt, wobei der Mikrocontroller (6) die ELV in Abhängigkeit von dem gewonnenen Wert für die Umgebungstemperatur ansteuert.

2. Ansteuerschaltung nach Anspruch 1, **dadurch gekennzeichnet, dass** die Watchdog-Schaltung so ausgebildet ist, dass sie periodisch mit einer vorgegebenen Periodendauer (T) Impulse an dem ersten Ausgang (8) ausgibt, wobei der von der Umgebungstemperatur abhängige Parameter der Impulsfolge die Periodendauer (T) ist, wobei der Mikrocontroller (6) die Abstände der an seinem Eingang (9) empfangenen Impulse derart auswertet, dass er einen Wert für die Umgebungstemperatur gewinnt.

3. Ansteuerschaltung nach Anspruch 2, **dadurch gekennzeichnet, dass** ein die Periodendauer bestimmender Widerstand der Watchdog-Schaltung ein temperaturabhängiger Widerstand (17) ist.

4. Ansteuerschaltung nach Anspruch 3, **dadurch gekennzeichnet, dass** der temperaturabhängige Widerstand (17) ein PTC-Widerstand oder NTC-Widerstand ist.

5. Ansteuerschaltung nach einem der Ansprüche 2 - 4, **dadurch gekennzeichnet, dass** der Mikrocontroller wenigstens einen weiteren Ausgang (5A - 5D) zum Ansteuern wenigstens eines zwischen einer Spannungsversorgung (2, 3) und dem Antriebsmotor (1) eingekoppelten Leistungsschaltbauelements (4A - 4D) aufweist, wobei der Mikrocontroller das Leistungsschaltbauelement mit einer Impulsfolge mit einem vorgegebenen Tastverhältnis ansteuert.

6. Ansteuerschaltung nach Anspruch 5, **dadurch gekennzeichnet, dass** das Tastverhältnis der das wenigstens eine Leistungsschaltbauelement (4A - 4D) ansteuernden Impulsfolge von der Periodendauer (T) der an dem Eingang (9) des Mikrocontrollers (6) empfangenen Impulse und somit von der Umgebungstemperatur der Watchdog-Schaltung (7) abhängig ist.

7. Ansteuerschaltung nach Anspruch 5 oder 6, **dadurch gekennzeichnet, dass** die Impulsfolge eine Frequenz zwischen 0,1 kHz und 100 kHz, vorzugsweise zwischen 4 kHz und 20 kHz, aufweist.

8. Ansteuerschaltung nach einem der Ansprüche 5 - 7, **dadurch gekennzeichnet, dass** das Tastverhältnis bei maximaler Motorleistung 100% beträgt.

9. Ansteuerschaltung nach einem der Ansprüche 2 - 8, **dadurch gekennzeichnet, dass** der Mikrocontroller so konfiguriert ist, dass die Ausgabe des Antwortsignals von einer vorgegebenen Flanke der Impulse an dem Eingang ausgelöst wird.

10. Ansteuerschaltung nach Anspruch 1, **dadurch gekennzeichnet, dass** die Watchdog-Schaltung so ausgebildet ist, dass sie Impulse mit einer vorgegebenen Impulsform an dem ersten Ausgang ausgibt, wobei der von der Umgebungstemperatur abhängige Parameter ein die Impulsform kennzeichnender Parameter ist, wobei der Mikrocontroller die Impulsform der an seinem Eingang empfangenen Impulse derart auswertet, dass er einen Wert für die Umgebungstemperatur gewinnt.

11. Ansteuerschaltung nach Anspruch 10, **dadurch gekennzeichnet, dass** die Watchdog-Schaltung so ausgebildet ist, dass sie Impulse mit einem vorgegebenen Tastverhältnis an dem ersten Ausgang ausgibt, wobei der von der Umgebungstemperatur abhängige Parameter das Tastverhältnis ist, wobei der Mikrocontroller das Tastverhältnis der an seinem Eingang empfangenen Impulse derart auswertet, dass er einen Wert für die Umgebungstemperatur gewinnt.

12. Ansteuerschaltung nach Anspruch 11, **dadurch gekennzeichnet, dass** ein das Tastverhältnis bestimmender Widerstand der Watchdog-Schaltung ein temperaturabhängiger Widerstand ist.

13. Ansteuerschaltung nach einem der Ansprüche 10 - 12, **dadurch gekennzeichnet, dass** der Mikrocontroller wenigstens einen weiteren Ausgang zum Ansteuern wenigstens eines zwischen einer Spannungsversorgung und dem Antriebsmotor eingekoppelten Leistungsschaltbauelements aufweist, wobei der Mikrocontroller das Leistungsschaltbauelement mit einer Impulsfolge mit einem vorgegebenen Tastverhältnis ansteuert.

14. Ansteuerschaltung nach Anspruch 13, **dadurch gekennzeichnet, dass** das Tastverhältnis der das wenigstens eine Leistungsschaltbauelement ansteuernden Impulsfolge von der Impulsform der an dem Eingang des Mikrocontrollers empfangenen Impulse und somit von der Umgebungstemperatur der Watchdog-Schaltung abhängig ist.

15. Ansteuerschaltung nach Anspruch 13 oder 14, **dadurch gekennzeichnet, dass** die Impulsfolge eine Frequenz zwischen 0,1 kHz und 100 kHz, vorzugsweise zwischen 4 kHz und 20 kHz, aufweist.

## Claims

1. A control circuit for an electronic steering lock with a microcontroller (6) for controlling a motor drive (1) of the automatic steering lock and a watchdog circuit (7),
wherein an input (9) of the microcontroller (6) is connected to a first output (8) of the watchdog circuit (7), an output (10) of the microcontroller is connected to an input (13) of the watchdog circuit and a reset input (15) of the microcontroller is connected to a second output (14) of the watchdog circuit,
wherein the microcontroller (6) is so configured that, after receipt of a pulse at the input (9), it produces a response signal at the output (10) within a first predetermined period of time (t₁),
wherein the watchdog circuit (7) is so constructed that if, after production of a pulse at its first output (8), it does not receive a response signal at its input (13) within a second predetermined period of time (t₂), which is greater than the first predetermined period of time (t₁), it produces a reset signal at its second output (14),
**characterised in that**
the watchdog circuit (7) is so constructed that it produces a pulse sequence at the first output (8), wherein at least one parameter (T) of the pulse sequence depends on an ambient temperature (θ) of an element (17) of the watchdog circuit, and
that the microcontroller (6) utilises the at least one parameter (T) of the pulse sequence received at its input (9) such that it produces a value for the ambient temperature (θ), wherein the microcontroller (6) controls the automatic steering lock in dependence on the value produced for the ambient temperature.

2. A control circuit as claimed in Claim 1, **characterised in that** the watchdog circuit is so constructed that it periodically produces pulses with a predetermined period (T) at the first output (8), wherein the parameter, which is dependent on the ambient temperature, of the pulse sequence is the period (T), wherein the microcontroller (6) utilises the intervals of the pulses received at its input (9) such that it produces a value for the ambient temperature.

3. A control circuit as claimed in Claim 2, **characterised in that** a resistor, which determines the period, of the watchdog circuit is a temperature-dependent resistor (17).

4. A control circuit as claimed in Claim 3, **characterised in that** the temperature-dependent resistor (17) is a PTC resistor or an NTC resistor.

5. A control circuit as claimed in one of Claims 2-4, **characterised in that** the microcontroller has at least one further output (5A-5D) for controlling at least one power switching component (4A-4D) connected between a voltage supply (2, 3) and the drive motor (1), wherein the microcontroller controls the power switching component with a pulse sequence with a predetermined mark-space ratio.

6. A control circuit as claimed in Claim 5, **characterised in that** the mark-space ratio of the pulse sequence controlling the at least one power switching component (4A-4D) is dependent on the period (T) of the pulses received at the input (9) of the microcontroller (6) and thus on the ambient temperature of the watchdog circuit (7).

7. A control circuit as claimed in Claim 5 or 6, **characterised in that** the pulse sequence has a frequency between 0.1 kHz and 100 kHz, preferably between 4 kHz and 20 kHz.

8. A control circuit as claimed in one of Claims 5-7, **characterised in that** the mark-space ratio is 100% at maximum motor output.

9. A control circuit as claimed in one of Claims 2-8, **characterised in that** the microcontroller is so configured that the production of the response signal is initiated by a predetermined flank of the pulses at the input.

10. A control circuit as claimed in Claim 1, **characterised in that** the watchdog circuit is so constructed that it produces pulses with a predetermined pulse shape at the first output, wherein the parameter dependent on the ambient temperature is a parameter characterising the pulse shape, wherein the microcontroller utilises the pulse shape of the pulses received at its input such that it produces a value for the ambient temperature.

11. A control circuit as claimed in Claim 10, **characterised in that** the watchdog circuit is so constructed that it produces pulses with a predetermined mark-space ratio at the first output, wherein the parameter dependent on the ambient temperature is the mark-space ratio, wherein the microcontroller utilises the mark-space ratio of the pulses received at its input such that it produces a value for the ambient temperature.

12. A control circuit as claimed in Claim 11, **characterised in that** a resistor, which determines the mark-space ratio, of the watchdog circuit is a temperature-dependent resistor.

13. A control circuit as claimed in one of Claims 10-12, **characterised in that** the microcontroller has at least one further output for controlling at least one power switching component connected between a voltage supply and the drive motor, wherein the microcontroller controls the power switching component with a pulse sequence with a predetermined mark-space ratio.

14. A control circuit as claimed in Claim 13, **characterised in that** the mark-space ratio of the pulse sequence controlling the at least one power switching component is dependent on the pulse shape of the pulses received at the input of the microcontroller and thus on the ambient temperature of the watchdog circuit.

15. A control circuit as claimed in Claim 13 or 14, **characterised in that** the pulse sequence has a frequency between 0.1 kHz and 100 kHz, preferably between 4 kHz and 20 kHz.

## Revendications

1. Circuit de commande pour un dispositif de blocage de direction électronique, comprenant un microcontrôleur (6) pour commander un entraînement moteur (1) du dispositif de blocage de direction électronique et d'un circuit de surveillance (7),
dans lequel une entrée (9) du microcontrôleur (6) est couplée à une première sortie (8) du circuit de surveillance (7), une sortie (10) du microcontrôleur est couplée à une entrée (13) du circuit de surveillance et une entrée de réinitialisation (15) du microcontrôleur est couplée à une seconde sortie (14) du circuit de surveillance,
dans lequel le microcontrôleur (6) est configuré de sorte qu'il délivre, après réception d'une impulsion à l'entrée (9) en l'espace d'une première période de temps prédéfinie (t₁), un signal de réponse à la sortie (10),
dans lequel le circuit de surveillance (7) est conçu de sorte que, si après la délivrance d'une impulsion à sa première sortie (8) en l'espace d'une seconde période de temps prédéfinie (t₂), qui est supérieure à la première période de temps prédéfinie (t₁), il ne reçoit aucun signal de réponse à son entrée (13), un signal de réinitialisation soit délivré à sa seconde sortie (14),
**caractérisé en ce que**
le circuit de surveillance (7) est conçu de sorte qu'il délivre une série d'impulsions à la première sortie (8), dans lequel au moins un paramètre (T) de la série d'impulsions dépend d'une température ambiante (ϑ) d'un élément (17) du circuit de surveillance, et **en ce que**
le microcontrôleur (6) exploite le au moins un paramètre (T) de la série d'impulsions reçue à son entrée (9) de sorte qu'il obtienne une valeur pour la température ambiante (ϑ), le microcontrôleur (6) commandant le dispositif de blocage de direction électronique en fonction de la valeur obtenue pour la température ambiante.

2. Circuit de commande selon la revendication 1, **caractérisé en ce que** le circuit de surveillance est conçu de sorte qu'il délivre périodiquement avec une durée de période prédéfinie (T) des impulsions à la première sortie (8), dans lequel le paramètre dépendant de la température ambiante de la série d'impulsions est la durée de lapériode (T), dans lequel le microcontrôleur (6) exploite les intervalles des impulsions reçues à son entrée (9) de manière à obtenir une valeur pour la température ambiante.

3. Circuit de commande selon la revendication 2, **caractérisé en ce qu'**une résistance du circuit de surveillance (17) déterminant la durée de période est une résistance (17) dépendant de la température.

4. Circuit de commande selon la revendication 3, **caractérisé en ce que** la résistance (17) dépendant de la température est une résistance de type PTC ou NTC.

5. Circuit de commande selon l'une quelconque des revendications 2 à 4, **caractérisé en ce que** le microcontrôleur présente au moins une autre sortie (5A à 5D) pour commander au moins un composant de commutation de puissance (4A à 4D) couplé entre une alimentation en tension (2, 3) et le moteur d'entraînement (1), dans lequel le microcontrôleur commande le composant de commutation de puissance avec une série d'impulsions avec un taux d'impulsions prédéfini.

6. Circuit de commande selon la revendication 5, **caractérisé en ce que** le taux d'impulsions de la série d'impulsions commandant le au moins un composant de commutation de puissance (4A à 4D) est dépendant de la durée de la période (T) des impulsions reçues à l'entrée (9) du microcontrôleur (6) et donc de la température ambiante du circuit de surveillance (7).

7. Circuit de commande selon la revendication 5 ou 6, **caractérisé en ce que** la série d'impulsions présente une fréquence comprise entre 0,1 kHz et 100 kHz, de préférence entre 4 kHz et 20 kHz.

8. Circuit de commande selon l'une quelconque des revendications 5 à 7, **caractérisé en ce que** le taux d'impulsions à une puissance maximale du moteur est de 100 %.

9. Circuit de commande selon l'une quelconque des revendications 2 à 8, **caractérisé en ce que** le microcontrôleur est configuré de sorte que la délivrance du signal de réponse soit déclenchée par un flanc prédéfini des impulsions à l'entrée.

10. Circuit de commande selon la revendication 1, **caractérisé en ce que** le circuit de surveillance est réalisé de sorte qu'il délivre des impulsions avec une forme d'impulsion prédéfinie à la première sortie, dans lequel le paramètre dépendant de la température ambiante est un paramètre caractérisant la forme d'impulsion, le microcontrôleur exploitant la forme des impulsions reçues à son entrée de manière à obtenir une valeur pour la température ambiante.

11. Circuit de commande selon la revendication 10, **caractérisé en ce que** le circuit de surveillance est réalisé de sorte qu'il délivre des impulsions avec un taux d'impulsions prédéfini à la première sortie, dans lequel le paramètre dépendant de la température ambiante est le taux d'impulsions, dans lequel le microcontrôleur exploite le taux des impulsions reçues à son entrée de manière à obtenir une valeur pour la température ambiante.

12. Circuit de commande selon la revendication 11, **caractérisé en ce qu'**une résistance du circuit de surveillance déterminant le taux d'impulsions est une résistance dépendant de la température.

13. Circuit de commande selon l'une quelconque des revendications 10 à 12, **caractérisé en ce que** le microcontrôleur présente au moins une autre sortie pour commander au moins un composant de commutation de puissance couplé entre une alimentation en tension et le moteur d'entraînement, dans lequel le microcontrôleur commande le composant de commutation de puissance avec une série d'impulsions ayant un taux d'impulsions prédéfini.

14. Circuit de commande selon la revendication 13, **caractérisé en ce que** le taux d'impulsions de la série d'impulsions commandant le au moins un composant de commutation de puissance est dépendant de la forme des impulsions reçues à l'entrée et donc de la température ambiante du circuit de surveillance.

15. Circuit de commande selon la revendication 13 ou 14, **caractérisé en ce que** la série d'impulsions présente une fréquence comprise entre 0,1 kHz et 100 kHz, de préférence entre 4 kHz et 20 kHz.
